# EUROPÄISCHE PATENTSCHRIFT

(11) **EP 0 435 956 B1**
(45) Veröffentlichungstag und Bekanntmachung des Hinweises auf die Patenterteilung: **06.07.1994**
(21) Anmeldenummer: 89911800.4
(22) Anmeldetag: 27.09.1989
(51) Int. Cl.: F01N 3/28

(54) **KATALYSATOR MIT DOPPELMANTELSYSTEM**
CATALYST WITH A DOUBLE CASING SYSTEM
CATALYSEUR A SYSTEME D'ENVELOPPE DOUBLE

(30) Priorität: 11.10.1988 DE 8812762 U
(43) Veröffentlichungstag der Anmeldung: 10.07.1991
(73) Patentinhaber: Emitec Gesellschaft für Emissionstechnologie mbH, 53797 Lohmar (DE)
(72) Erfinder: Maus, Wolfgang, D-5060 Bergisch Gladbach 1 (DE); Wieres, Ludwig, D-5063 Overath 1 (DE); Sahler, Rainer, D-5000 Köln 80 (DE)
(74) Vertreter: Kahlhöfer, Hermann, Dipl.-Phys.
(86) Internationale Anmeldenummer: EP8901134
(87) Internationale Veröffentlichungsnummer: WO9004087

(56) Entgegenhaltungen:
- EP-A- 0 177 479
- EP-A- 0 212 243
- EP-A- 0 314 129
- US-A- 4 160 010

## Beschreibung

Die vorliegende Erfindung betrifft einen ummantelten Katalysator, insbesondere für Kraftfahrzeuge, welcher mindestens einen metallischen, für Abgas durchlässigen, wabenförmigen Katalysator-Trägerkörper mit einem diesen tragenden Mantelrohr enthält.

Metallische Katalysator-Trägerkörper sind in zahlreichen Formen bekannt, so beispielsweise aus der EF-A-0 245 737. Sie können beispielsweise aus Stahlblechen aufgebaut oder auch pulvermetallurgisch hergestellt sein. Von besonderer Bedeutung für die Haltbarkeit eines solchen Körpers ist die Beherrschung der durch thermische Wechselbelastungen entstehenden mechanischen Spannungen in einer solchen Anordnung. Dies kann durch die Formgebung oder aber auch durch eine besondere Art der Ummantelung geschehen. In der EP-A-0 212 243 wird eine Halterung für einen Katalysator-Trägerkörper beschrieben, welche dem Katalysator-Trägerkörper eine spannungsfreie Längendehnung ermöglicht. Bei dieser Anordnung ist nur ein Mantelrohr vorhanden, welches den Katalysator-Trägerkörper mit Abstand konzentrisch umgibt.

Bei vielen Formen von Katalysator-Trägerkörpern, beispielsweise auch dem in der EP-A-0 245 737 beschriebenen, kann jedoch nicht auf ein Mantelrohr verzichtet werden, welches den eigentlichen Wabenkörper direkt umschließt und seine Struktur erhält.

Aus der EP-A-0 177 479 ist auch ein Wabenkörper bekannt, bei dem ein inneres Mantelrohr frei längendehnbar in einem äußeren Mantelrohr angeordnet ist.

Aufgabe der vorliegenden Erfindung ist es, eine Ummantelung für einen Katalysator zu schaffen, welche einfach und kostengünstig herstellbar ist und auch für große Katalysatorkörper mit einem Volumen von beispielsweise über 1 Liter thermischen Wechselbelastungen standhält.

Zur Lösung dieser Aufgabe wird ein Abgas-Katalysator mit den Merkmalen das Anspruchs 1 ausgestattet. Ein aus Stabilitätsgründen vorhandenes inneres Mantelrohr wird etwa konzentrisch mit einem äußeren Mantelrohr umgeben. Ein Abstand von etwa 1 bis 5 mm zwischen den beiden Mantelrohren wird dabei bevorzugt. Das innere Mantelrohr ist in einem Endbereich mit dem Endbereich des äußeren Mantelrohres fest verbunden, vorzugsweise mit einer Rundschweißnaht verschweißt. Das andere Ende des inneren Mantelrohres ragt frei in das Innere des äußeren Mantelrohres und kann sich so bei einer Erhöhung der Temperatur ungehindert ausdehnen. Diese Art der Ummantelung hat folgende entscheidenden Vorteile:
Zunächst kann der innere Mantel, da er nicht den Innendruck tragen muß, sehr viel dünner als ein einfaches Mantelrohr gemacht werden, beispielsweise nur 0,1 bis 1 mm dick. Dadurch und durch die als thermische Isolierung wirkende zusätzliche äußere Ummantelung kann das innere Mantelrohr sich schneller mit dem Katalysator-Trägerkörper aufwärmen und insgesamt eine höhere Temperatur erreichen als ohne den äußeren Mantel. Dies reduziert die thermischen Spannungen im Inneren des Katalysator-Trägerkörpers. Weiter ist das innere Mantelrohr keinen äußeren Einflüssen, beispielsweise durch Spritzwasser, ausgesetzt, so daß in der Materialauswahl hierauf keine Rücksicht mehr genommen werden muß. Wie in den Unteransprüchen angegeben, kann daher beispielsweise ein ferritisches Material, welches für diesen Einsatz optimiert ist, eingesetzt werden. Ferner braucht das innere Mantelrohr, da es keinerlei Dichtfunktion mehr erfüllt, auch nicht aus einem geschlossenen Blech zu bestehen. Es kann ein gelochtes Blech verwendet werden, was eine beachtliche Gewichts- und Materialersparnis mit sich bringt. Die Art, Form und Größe der Lochung ist in weiten Grenzen variabel, vorzugsweise können jedoch Bleche eingesetzt werden, deren Fläche zu etwa 50 % mit Löchern von etwa 1 cm Größe versehen ist.

Erfindungsgemäß wird das innere Mantelrohr, sofern dies eine gewisse axiale Länge überschreitet, zusätzlich in einem Schiebesitz gehaltert Dadurch werden Schwingungen unterdrückt und Vibrationsbrüche vermieden.

Insbesondere kann ein solcher Schiebesitz beispielsweise durch umlaufende oder einzelne Innensicken im äußeren Mantel gebildet werden. Umlaufende Innensicken erhöhen dabei gleichzeitig die Stabilität des äußeren Mantels und beeinflussen dessen Schallabstrahlung, was für verschiedene Anwendungen von Vorteil sein kann. Vorteilhafte Ausgestaltungen sind in den abhängigen Ansprüchen beschrieben.

Dabei übernimmt das äußere Mantelrohr die Abdichtung der Gesamtanordnung, die Befestigung am übrigen Abgassystem und den Schutz vor äußeren Einflüssen, während das innere Mantelrohr lediglich der Formstabilität und Halterung des eigentlichen Katalysator-Trägerkörpers dient. Dabei kann das äußere Mantelrohr vorzugsweise aus austenitischem Material bestehen.

Besonders günstig ist das vorgeschlagene Ummantelungssystem dann, wenn in einem äußeren Mantelrohr zwei Katalysator-Trägerkörper untergebracht werden sollen. Aus verschiedenen Gründen kann es sinnvoll sein, z. B. bei Hauptkatalysatoren von Kraftfahrzeugen der oberen Leistungsklasse, ein gegebenes Volumen von beispielsweise etwa 3 Litern bei 10 bis 15 cm Außendurchmesser nicht mit einem einzigen Katalysator-Trägerkörper auszufüllen, sondern mit zwei oder mehreren axial hintereinander angeordneten Scheiben. Einerseits lassen sich solche Scheiben leichter fertigen und andererseits ermöglichen die Zwischenräume zwischen solchen Scheiben eine Verwirbelung des Abgases und damit eine Erhöhung der Umsetzungsrate. Sinnvoll kann es auch sein, Scheiben von unterschiedlicher axialer Länge, mit unterschiedlicher Kanalzahl und/oder unterschiedlicher katalytisch wirksamer Beschichtung zu verwenden. Die erfindungsgemäße Ausführung bietet nun eine gute Möglichkeit, zwei Katalysatorscheiben in einem äußeren Mantelrohr anzuordnen. Wie anhand der Zeichnung näher erläutert wird, werden die beiden inneren Mantelrohre der beiden Katalysatorscheiben jeweils mit einem Ende an den beiden Enden des äußeren Mantelrohres befestigt, vorzugsweise angeschweißt. Die frei längendehnbaren inneren Enden der beiden inneren Mantelrohre können bevorzugt ineinandergesteckt werden, indem das erste innere Mantelrohr entsprechend verjüngt oder das zweite innere Mantelrohr entsprechend aufgeweitet wird. So entsteht ein Schiebesitz, welcher sich bei zunehmender Aufwärmung der Anordnung immer weiter ineinanderschiebt und damit in jedem Betriebszustand eine sichere Halterung der beiden Katalysator-Trägerkörper bewirkt. Alternativ oder zusätzlich sind aber auch Schiebesitze, z. B. durch Innensicken, zwischen dem äußeren und den inneren Mantelrohren möglich.

Das beschriebene Doppelmantelsystem ermöglicht schließlich auch eine einfache Einbindung der gesamten Katalysatoranordnung in ein Abgassystem, indem an den Enden die üblichen Anschlußstücke z. B. auf den überstehenden Innenmantel aufgeschoben und mit dem Außenmantel verschweißt werden können.

Ausführungsbeispiele der Erfindung in teilweise schematischer Form sind in der Zeichnung dargestellt, und zwar zeigen
Figur 1 eine Katalysatoranordnung aus zwei Katalysatorscheiben mit Doppelmantelsystem,
Figur 2 eine Variante der Figur 1 mit anderer Gestaltung der Endbereiche und einer zusätzlichen Innensicke des äußeren Mantelrohres zur Abstützung des inneren Systems,
Figur 3 eine weitere Variante der Anordnung aus Figur 1 mit zweiteiligem Außenmantel für Anordnungen mit großer axialer Länge und
Figur 4 die Anwendung der Erfindung bei einteiligen Katalysatoren.

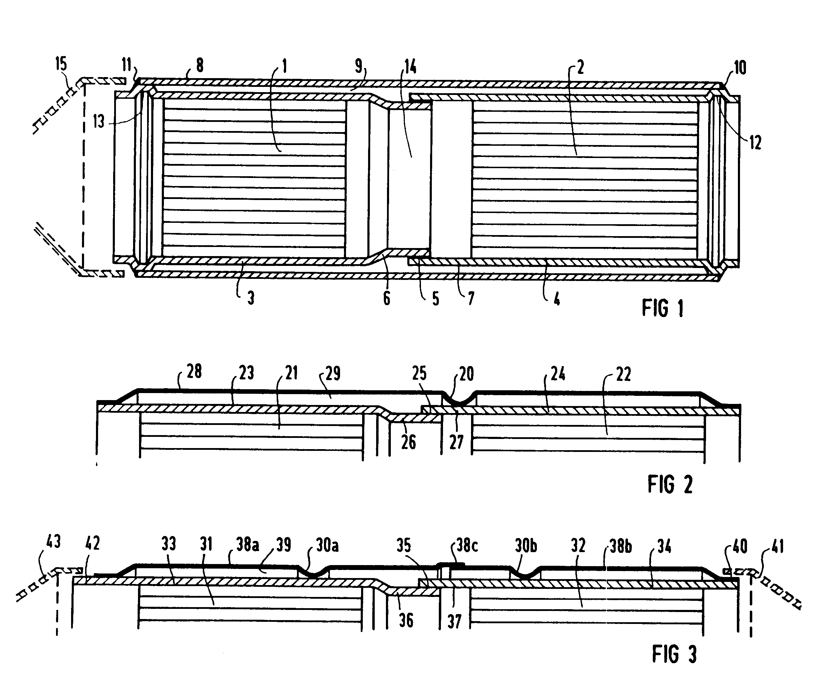

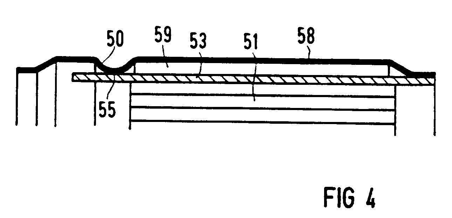

Figur 1 zeigt das Prinzip der vorliegenden Erfindung anhand eines großvolumigen Katalysators, der aus zwei Katalysator-Trägerkörpern 1, 2 besteht. Durch Weglassen eines der beiden Katalysatorkörper und entsprechendes Verkürzen des äußeren Mantelrohres 8 in Figur 1 ergibt sich jedoch auch das Wesen der vorliegenden Erfindung bei der Anwendung auf einteilige Katalysatoren z. B. gemäß Fig. 4. Das gleiche gilt entsprechend für die Figuren 2 und 3.

In Figur 1 weist die Katalysatoranordnung einen ersten metallischen Wabenkörper 1 und einen zweiten metallischen Wabenkörper 2 auf, welche von einem ersten inneren Mantelrohr 3 bzw. einem zweiten inneren Mantelrohr 4 umschlossen sind. Beide inneren Mantelrohre 3, 4 stehen an beiden Enden über die eigentlichen metallischen Wabenkörper 1, 2 über. Dabei weist das innere überstehende Ende des ersten inneren Mantelrohres 3 einen verjüngten Kragen 6 auf, welcher in das Innere des inneren Kragens 7 des zweiten inneren Mantelrohres 4 hineinragt und dort mit diesem einen Schiebesitz 5 bildet. Zwischen den beiden Wabenkörpern 1, 2 bleibt so ein Mischraum 14 leer, in welchem sich die Abgase nach dem Passieren des ersten metallischen Wabenkörpers 1 erneut durchmischen können. Der äußere Endbereich des ersten inneren Mantelrohres 3 weist eine umlaufende Außensicke 13 auf, und der äußere Endbereich des zweiten inneren Mantelrohres 4 weist ebenfalls eine umlaufende Außensicke 12 auf. Über die beiden Außensicken 12, 13 ist ein äußeres Mantelrohr 8 auf die ganze Anordnung aufgeschoben und mit Rundschweißnähten 10, 11 auf den Außensicken 12, 13 befestigt. Die äußeren Enden der beiden inneren Mantelrohre 3, 4 stehen etwas über das äußere Mantelrohr 8 über, so daß leicht ein (gestrichelt angedeutetes) Anschlußstück 15 bis zum Anschlag an das äußere Mantelrohr aufgeschoben werden kann. Der Anschluß an ein Abgassystem eines Kraftfahrzeuges kann somit problemlos erfolgen, wobei unter Umständen sogar die Schweißnähte 10, 11 zur gleichzeitigen Verbindung von Anschlußstücken 15, inneren Mantelrohren 3-bzw. 4 und äußerem Mantelrohr 8 genutzt werden können. Es sei hinzugefügt, daß die Figur 1 in keiner Weise maßstäblich ist, sondern nur den prinzipiellen Aufbau der Anordnung wiedergibt. Insbesondere können die inneren Mantelrohre 3, 4 wesentlich dünner als das äußere Mantelrohr 8 sein. Außerdem kann der Mischraum 14 eine viel kleinere axiale Länge haben als hier dargestellt. Wichtig ist nur, daß die Dimensionierung des verjüngten Kragens 6 dem aufgeschobenen Kragen 7 genügend Spielraum für eine thermische Längendehnung der beiden inneren Mantelrohre 3, 4 läßt. Die Wabenkörper 1, 2 können unterschiedliche axiale Länge und eine unterschiedliche Zahl von Kanälen pro Querschnittseinheit aufweisen.

Wie die Figuren 2 und 3 zeigen, gibt es verschiedene Möglichkeiten der Verbindung von innerem und äußerem Mantel und der Gestaltung der Endbereiche der Anordnung. Außerdem können der oder die Wabenkörper durch Innensicken abgestützt sein. So zeigt Figur 2 zwei metallische Wabenkörper 21, 22 mit ihren inneren Mantelrohren 23, 24, welche wie in Figur 1 mittels eines verjüngten Kragens 26 und eines überstehenden Kragens 27 ineinandergesteckt sind, so daß ein Schiebesitz 25 entsteht. Bei diesem Ausführungsbeispiel weist der Außenmantel 28 eine umlaufende Innensicke 20 auf, welche in ihrer Tiefe dem Zwischenraum 29 zwischen dem äußeren und inneren Mantelsystem entspricht. Bei Katalysatoranordnungen mit relativ großer axialer Länge kann eine solche Innensicke 20 Schwingungen der Wabenkörper 21, 22 verhindern, ohne deren axiale Bewegungsfreiheit einzuschränken. Zusätzliche Vorteile können sich durch die Verringerung der Schallabstrahlung ergeben.

Figur 3 zeigt eine Katalysatoranordnung, bei der das äußere Mantelrohr aus zwei Teilen 38a, 38b besteht, welche miteinander verbunden 38c sind. Die Verbindungsstelle 38c kann beispielsweise in einer umlaufenden Stumpfschweißnaht bestehen, die beiden Teile 38a, 38b können aber auch ineinandergesteckt und dann verbunden sein. Die Anordnung der metallischen Wabenkörper 31, 32 mit ihren inneren Mantelrohren 33, 34 entspricht denen der Figuren 1 und 2. Im vorliegenden Fall weist das äußere Mantelrohr 2 umlaufende Innensicken 30a, 30b auf, welche beide inneren Mantelrohre 33, 34 abstützen. Auch hier gleiten die Kragen 36, 37 der beiden inneren Mantelrohre 31, 32 mit Schiebesitz 35 ineinander. Figur 3 zeigt zusätzlich noch zwei verschiedene Möglichkeiten der Gestaltung der Endbereiche des Doppelmantelsystems. Links kann ein Anschlußstück 43 auf das überstehende Ende 42 des ersten inneren Mantelrohres 33 aufgeschoben werden, bis es an das verjüngte Ende des äußeren Mantelrohres 38a stößt. An der rechten Seite steht das zweite innere Mantelrohr 34 nicht über das äußere Mantelrohr 38b über. Dort kann jedoch ein Anschlußstück 41 über das verjüngte Ende 40 des äußeren Mantelrohres 38b geschoben und mit diesem verbunden werden. Sinnvoll ist dabei, daß keine Schweißnähte die äußeren Lagen des Katalysators beschädigen können. Weitere Varianten in der Gestaltung der Endbereiche der Anordnung sind möglich, wobei die Anordnungen im allgemeinen so gewählt werden sollten, daß das äußere Mantelrohr und die Anschlußstücke die inneren Mantelrohre vollständig und dicht umschließen.

Figur 4 zeigt der Vollständigkeit halber noch ein Ausführungsbeispiel der Erfindung für einteilige Katalysatoren. Ein metallischer Wabenkörper 51 ist mit seinem inneren Mantelrohr 53 an einer Stirnseite fest mit einem äußeren Mantelrohr 58 verbunden, wobei ein Zwischenraum 59 zwischen beiden Mantelrohren vorhanden ist. Eine umlaufende Innensicke 50 im äußeren Mantelrohr 58 haltert das andere Ende des inneren Mantelrohres 53 in einem Schiebesitz 55, so daß der Katalysator 51 mit dem inneren Mantelrohr 53 frei längendehnbar gegenüber dem äußeren Mantelrohr 58 ist.

Die vorliegenden Katalysatoren mit Doppelmantelsystem eignen sich für Hauptkatalysatoren von Personenkraftwagen, besonders auch für großvolumige der oberen Leistungsklasse mit hoher thermischer Betriebsbelastung.

## Patentansprüche

1. Abgas-Katalysator mit Gehäuse, insbesondere für Kraftfahrzeuge, enthaltend mindestens einen ersten metallischen, für Abgas durchlässigen, wabenförmigen Katalysator-Trägerkörper (1; 21; 31) mit einem diesen tragenden ersten inneren Mantelrohr (3; 23; 33) mit folgenden Merkmalen:
a) es ist ein äußeres Mantelrohr (8; 28; 38a; b, c,) vorhanden, welches das erste innere Mantelrohr (3; 23; 33) mit Abstand etwa konzentriert umgibt;
b) das erste innere (3; 23; 33) und das äußere Mantelrohr (8; 28; 38) sind in einem Endbereich (11, 13) miteinander fest verbunden;
c) das erste innere Mantelrohr (3; 23; 33) ist frei längendehnbar in dem äußeren Mantelrohr (8; 28; 38a, b, c,) angeordnet;
d) das frei längendehnbare innere Mantelrohr (3; 23; 33) ist zusätzlich in einem Schiebesitz (5; 30a) gehaltert,
**dadurch gekennzeichnet**, daß der Schiebesitz innerhalb der Längserstreckung des äußeren Mantelrohres (8; 28; 38a, b, c) und von dessen Ende beabstandet angeordnet ist, insbesondere durch umlaufende oder einzelne Innensicken (30a) im äußeren Mantelrohr (38a) gebildet ist.

2. Abgas-Katalysator mit Gehäuse nach Anspruch 1 mit folgenden Merkmalen:
a) es ist ein äußeres Mantelrohr (8; 28; 38a; b, c,) vorhanden, welches das erste innere Mantelrohr (3; 23; 33) mit Abstand etwa konzentriert umgibt;
b) das erste innere (3; 23; 33) und das äußere Mantelrohr (8; 28; 38) sind in einem Endbereich (11, 13) miteinander fest verbunden;
c) das erste innere Mantelrohr (3; 23; 33) ist frei längendehnbar in dem äußeren Mantelrohr (8; 28; 38a, b, c,) angeordnet;
d) das frei längendehnbare innere Mantelrohr (3; 23; 33) ist zusätzlich in einem Schiebesitz (5; 30a) gehaltert,
**gekennzeichnet durch** folgende Merkmale:
e) etwa konzentrisch in dem äußeren Mantelrohr (8; 28; 38a, b, c,) ist ein zweiter Katalysator-Trägerkörper (2; 22; 32) mit einem diesen tragenden zweiten inneren Mantelrohr (4; 24; 34) vorhanden;
f) das erste innere Mantelrohr (3; 23; 33) ist mit seinem einen Endbereich mit dem einen Endbereich des äußeren Mantelrohres (8; 28; 38) fest verbunden;
g) das zweite innere Mantelrohr (4; 24; 34) ist mit seinem einen Endbereich mit dem anderen Endbereich des äußeren Mantelrohres (8; 28; 38a, b, c) fest verbunden;
h) die anderen Endbereiche (6, 7; 26, 27; 36, 37) des ersten (3; 23; 33) und zweiten (4; 24; 34) inneren Mantelrohres sind mit Schiebesitz ineinander (5; 25; 35) und/oder innerhalb (20; 30a, 30b) des äußeren Mantelrohrs (28; 38a, 38b) gehaltert.

3. Abgas-Katalysator nach Anspruch 1 oder 2, **dadurch** **gekennzeichnet**, daß das äußere Mantelrohr (8; 28; 38a, b, c,) die Halterung und den Außenschutz der Gesamtanordnung bildet sowie Träger des Innendruckes ist, während das mindestens eine innere Mantelrohr (3; 23; 33) nur die sichere Halterung des Katalysator-Trägerkörpers (1; 21; 31) bildet.

4. Abgas-Katalysator nach einem der vorhergehenden Ansprüche, **dadurch gekennzeichnet**, daß das äußere Mantelrohr (8; 28; 38a, b, c) aus austenitischem Material besteht.

5. Abgas-Katalysator nach einem der vorhergehenden Ansprüche, **dadurch gekennzeichnet**, daß das mindestens eine innere Mantelrohr (3; 23; 33) aus ferritischem Material besteht.

6. Abgas-Katalysator nach einem der vorhergehenden Ansprüche, **dadurch gekennzeichnet**, daß das mindestens eine innere Mantelrohr (3; 23; 33) zumindest in Teilbereichen gelocht ist, vorzugsweise mit Ausnahme der Endbereiche (6, 11; 26; 36, 42).

7. Abgas-Katalysator nach Anspruch 2, **dadurch gekennzeichnet**, daß auch das zweite innere Mantelrohr (4; 24; 34) aus ferritischem und/oder gelochtem Blech besteht.

8. Abgas-Katalysator nach Anspruch 2 oder 7, **dadurch gekennzeichnet**, daß die beiden Katalysator-Trägerkörper (1, 2; 21, 22; 31, 32) eine unterschiedliche axiale Länge und/oder eine unterschiedliche Anzahl von Kanälen pro Querschnittseinheit haben.

9. Abgas-Katalysator nach Anspruch 2, 7 oder 8, **dadurch gekennzeichnet**, daß zwischen den beiden Katalysator-Trägerkörpern (1, 2; 21, 22; 31, 32) ein Zwischenraum (14) zur Verwirbelung der Abgase und zum Ausgleich von Längendehnungen vorhanden ist, vorzugsweise mit einer axialen Länge zwischen etwa 1 bis 3 cm.

10. Abgas-Katalysator nach Anspruch 2, 7, 8 oder 9, **dadurch gekennzeichnet**, daß die beiden frei längendehnbaren Enden (6, 7; 26, 27; 36, 37) der beiden inneren Mantelrohre (3, 4; 23, 24; 33, 34) mit Schiebesitz (5; 25; 35) ineinander geführt sind, vorzugsweise indem das Ende (6; 26; 36) des ersten inneren Mantelrohres (3; 23; 33) eine Verjüngung (6) aufweist und in kaltem Zustand einige Millimeter in das Innere des zweiten inneren Mantelrohres (4; 24; 34) ragt.

11. Abgas-Katalysator nach einem der vorhergehenden Ansprüche, **dadurch gekennzeichnet**, daß auf die Endbereiche der Gesamtanordnung Anschlußstücke (15; 41; 43) aufgeschoben und mit dem äußeren Mantelrohr (8; 28; 28) verbunden werden können, vorzugsweise durch Stumpfschweißung, wobei insbesondere jeweils eine einzige umlaufende Schweißnaht (10, 11) zur Verbindung von Anschlußstück (15), äußerem Mantelrohr (8) und innerem Mantelrohr (3) ausreicht

## Claims

1. An exhaust gas catalyst having a housing, in particular for motor vehicles, including at least one first metallic honeycomb catalyst carrier body (1; 21; 31) which is transmissive for exhaust gas with a first inner casing tube (3; 23; 33) carrying the catalyst carrier body, having the following features:
a) there is provided an outer casing tube (8; 28; 38a, b, c) which approximately concentrically surrounds the first inner casing tube (3; 23; 33) at a spacing;
b) the first inner casing tube (3; 23; 33) and the outer casing tube (8; 28; 38) are fixedly connected together in an end region (11, 13);
c) the first inner casing tube (3; 23; 33) is arranged freely longitudinally extensibly in the outer casing tube (8; 28; 38a, b, c); and
d) the freely longitudinally extensible inner casing tube (3; 23; 33) is additionally held in a sliding fit (5; 30a),
characterised in that the sliding fit is arranged within the longitudinal extent of the outer casing tube (8; 28; 38a, b, c) and spaced from the end thereof, and in particular is formed by peripherally extending or individual internal beads (30a) in the outer casing tube (38a).

2. An exhaust gas catalyst having a housing according to claim 1, with the following features:
a) there is provided an outer casing tube (8; 28; 38a, b, c) which approximately concentrically surrounds the first inner casing tube (3; 23; 33) at a spacing;
b) the first inner casing tube (3; 23; 33) and the outer casing tube (8; 28; 38) are fixedly connected together in an end region (11, 13);
c) the first inner casing tube (3; 23; 33) is arranged freely longitudinally extensibly in the outer casing tube (8; 28; 38a, b, c); and
d) the freely longitudinally extensible inner casing tube (3; 23; 33) is additionally held in a sliding fit (5; 30a),
characterised by the following features:
e) disposed approximately concentrically in the outer casing tube (8; 28; 38a, b, c) is a second catalyst carrier body (2; 22; 32) having a second inner casing tube (4; 24; 34) carrying same;
f) the first inner casing tube (3; 23; 33) is fixedly connected by its one end region to the one end region of the outer casing tube (8; 28; 38);
g) the second inner casing tube (4; 24; 34) is fixedly connected by its one end region to the other end region of the outer casing tube (8; 28; 38a, b, c); and
h) the other end regions (6, 7; 26, 27; 36, 37) of the first inner casing tube (3; 23; 33) and the second inner casing tube (4; 24; 34) are held with a sliding fit one within the other (5; 25; 35) and/or within (20; 30a, 30b) the outer casing tube (28a; 38a, 38b).

3. An exhaust gas catalyst according to claim 1 or claim 2 characterised in that the outer casing tube (8; 28; 38a, b, c) forms the holding means and the outer protection of the whole arrangement and is the support for the internal pressure wherein the at least one inner casing tube (3; 23; 33) only forms the secure holding bans of the catalyst carrier body (1; 21; 31).

4. An exhaust gas catalyst according to one of the preceding claims characterised in that the outer casing tube (8; 28; 38a, b, c) comprises austenitic material.

5. An exhaust gas catalyst according to one of the preceding claims characterised in that the at least one inner casing tube (3; 23; 33) comprises ferritic material.

6. An exhaust gas catalyst according to one of the preceding claims characterised in that the at least one inner casing tube (3; 23; 33) is perforated at least in portions thereof, preferably with the exception of the end regions (6, 11; 26; 36, 42).

7. An exhaust gas catalyst according to claim 2 characterised in that the second inner casing tube (4; 24; 34) also comprises ferritic and/or perforated sheet metal.

8. An exhaust gas catalyst according to claim 2 or claim 7 characterised in that the two catalyst carrier bodies (1, 2; 21, 22; 31, 32) are of different axial lengths and/or have a different number of passages per unit of cross-section.

9. An exhaust gas catalyst according to claim 2, claim 7 or claim 8 characterised in that provided between the two catalyst carrier bodies (1, 2; 21, 22; 31, 32) is an intermediate space (14) for producing turbulence in the exhaust gases and for compensating for lengthwise extension phenomena, preferably of an axial length of between approximately 1 and 3 cm.

10. An exhaust gas catalyst according to claim 2, claim 7, claim 8 or claim 9 characterised in that the two freely longitudinally extensible ends (6, 7; 26, 27; 36, 37) of the two inner casing tubes (3, 4; 23, 24; 33, 34) are guided one within the other with a sliding fit (5; 25; 35), preferably by the end (6; 26; 36) of the first inner casing tube (3; 23; 33) having a reduction portion (6) and projecting in the cold condition by a few millimetres into the interior of the second inner casing tube (4; 24; 34).

11. An exhaust gas catalyst according to one of the preceding claims characterised in that connecting portions (15; 41; 43) can be pushed on to the end regions of the overall arrangement and connected to the outer casing tube (8; 28; 38), preferably by butt welding, wherein in particular a respective single peripherally extending weld seam (10, 11) is sufficient to connect the connecting portion (15), the outer casing tube (8) and the inner casing tube (3).

## Revendications

1. Catalyseur de gaz d'échappement avec boîtier, en particulier pour véhicules automobiles, comprenant au moins un premier corps support de catalyseur (1 ; 21 ; 31) à nid d'abeilles, métallique et perméable aux gaz d'échappement, avec un premier tube enveloppe intérieur (3 ; 23 ; 33) le soutenant, présentant les particularités suivantes :
a) il est prévu un tube enveloppe extérieur (8 ; 28 ; 38a, b, c) qui entoure à peu près concentriquement avec un espace le premier tube enveloppe intérieur (3 ; 23 ; 33) ;
b) le premier tube enveloppe intérieur (3 ; 23 ; 33) et le tube enveloppe extérieur (8 ; 28 ; 38) sont fermement reliés l'un à l'autre dans une zone d'extrémité (11, 13) ;
c) le premier tube enveloppe intérieur (3 ; 23 ; 33) est disposé dans le tube enveloppe extérieur (8 ; 28 ; 38a, b, c) de manière à pouvoir librement se dilater dans le sens de la longueur ;
d) le tube enveloppe intérieur (3 ; 23 ; 33) librement dilatable dans le sens de la longueur est, en outre, maintenu dans un ajustement appuyé (5 ; 30a),
caractérisé en ce que l'ajustement appuyé est disposé à l'intérieur de l'étendue longitudinale du tube enveloppe extérieur (8 ; 28 ; 38a, b, c) et à distance de l'extrémité de celui-ci, et est en particulier formé par des moulures internes continues ou isolées (30a) dans le tube enveloppe extérieur (38a).

2. Catalyseur de gaz d'échappement avec boîtier selon la revendication 1, avec les particularités suivantes :
a) il est prévu un tube enveloppe extérieur (8 ; 28 ; 38a, b, c) qui entoure à peu près concentriquement avec un espace le premier tube enveloppe intérieur (3 ; 23 ; 33) ;
b) le premier tube enveloppe intérieur (3 ; 23 ; 33) et le tube enveloppe extérieur (8 ; 28 ; 38) sont fermement reliés l'un à l'autre dans une zone d'extrémité (11, 13) ;
c) le premier tube enveloppe intérieur (3 ; 23 ; 33) est disposé dans le tube enveloppe extérieur (8 ; 28 ; 38a, b, c) de manière à pouvoir se dilater librement dans le sens de la longueur ;
d) le tube enveloppe intérieur (3 ; 23 ; 33), librement dilatable dans le sens de la longueur, est en outre maintenu dans un ajustement appuyé (5 ; 30a),
caractérisé par les particularités suivantes :
e) il est prévu, de manière à peu près concentrique dans le tube enveloppe extérieur (8 ; 28 ; 38a, b, c), un deuxième corps support de catalyseur (2 ; 22 ; 32) avec un deuxième tube enveloppe intérieur (4 ; 24 ; 34) le soutenant ;
f) le premier tube enveloppe intérieur (3 ; 23 ; 33) est fermement relié par l'une de ses zones d'extrémité à une zone d'extrémité du tube enveloppe extérieur (8 ; 28 ; 38) ;
g) le deuxième tube enveloppe intérieur (4 ; 24 ; 34) est fermement relié par l'une de ses zones d'extrémité à l'autre zone d'extrémité du tube enveloppe extérieur (8 ; 28 ; 38a, b, c) ;
h) les autres zones d'extrémité (6, 7 ; 26, 27 ; 36, 37) des premier (3 ; 23 ; 33) et deuxième (4 ; 24 ; 34) tubes enveloppes intérieurs sont maintenues avec un ajustement appuyé l'une dans l'autre (5 ; 25 ; 35) et/ou à l'intérieur (20 ; 30a, 30b) du tube enveloppe extérieur (28 ; 38a, 38b).

3. Catalyseur de gaz d'échappement selon la revendication 1 ou 2, caractérisé en ce que le tube enveloppe extérieur (8 ; 28 ; 38a, b, c) constitue le support et la protection extérieure de l'ensemble de la disposition et supporte la pression interne tandis qu'au moins un tube enveloppe intérieur (3 ; 23 ; 33) ne constitue que le support sûr du corps support de catalyseur (1 ; 21 ; 31).

4. Catalyseur de gaz d'échappement selon l'une des revendications précédentes, caractérisé en ce que le tube enveloppe extérieur (8 ; 28 ; 38a, b, c) consiste en un matériau austénitique.

5. Catalyseur de gaz d'échappement selon l'une des revendications précédentes, caractérisé en ce qu'au moins un tube enveloppe intérieur (3 ; 23 ; 33) consiste en un matériau ferritique.

6. Catalyseur de gaz d'échappement selon l'une des revendications précédentes, caractérisé en ce qu'au moins un tube enveloppe intérieur (3 ; 23 ; 33) est perforé au moins dans des zones partielles, de préférence à l'exception des zones d'extrémité (6, 11 ; 26 ; 36, 42).

7. Catalyseur de gaz d'échappement selon la revendication 2, caractérisé en ce que le deuxième tube enveloppe intérieur (4 ; 24 ; 34) consiste en une tôle ferritique et/ou perforée.

8. Catalyseur de gaz d'échappement selon la revendication 2 ou 7, caractérisé en ce que les deux corps supports de catalyseur (1, 2 ; 21, 22 ; 31, 32) ont une longueur axiale différente et/ou un nombre différent de canaux par unité de section transversale.

9. Catalyseur de gaz d'échappement selon la revendication 2, 7 ou 8, caractérisé en ce qu'il est prévu, entre les deux corps supports de catalyseur (1, 2 ; 21, 22 ; 31, 32) un intervalle (14) pour le tourbillonnement des gaz d'échappement et pour la compensation de dilatations longitudinales, cet intervalle ayant de préférence une longueur axiale située entre environ 1 et 3 cm.

10. Catalyseur de gaz d'échappement selon la revendication 2, 7, 8 ou 9, caractérisé en ce que les deux extrémités (6, 7 ; 26, 27 ; 36, 37), librement dilatables dans le sens de la longueur, des deux tubes enveloppes intérieurs (3, 4 ; 23, 24 ; 33, 34) sont insérées l'une dans l'autre avec un ajustement appuyé (5 ; 25 ; 35), l'extrémité (6 ; 26 ; 36) du premier tube enveloppe intérieur (3 ; 23 ; 33) présentant de préférence un effilement (6) et pénétrant, à l'état froid, de quelques millimètres à l'intérieur du deuxième tube enveloppe intérieur (4 ; 24 ; 34).

11. Catalyseur de gaz d'échappement selon l'une des revendications précédentes, caractérisé en ce que des pièces de raccordement (15 ; 41 ; 43) peuvent être enfilées sur les zones d'extrémité de l'ensemble de la disposition, et être fixées au tube enveloppe extérieur (8 ; 28 ; 28) de préférence par soudage bout à bout, une seule soudure continue (10, 11) suffisant en particulier chaque fois à l'assemblage de la pièce de raccordement (15), du tube enveloppe extérieur (8) et du tube enveloppe intérieur (3).
